# EUROPÄISCHE PATENTANMELDUNG

(11) **EP 0 982 835 A1**
(43) Veröffentlichungstag der Anmeldung: **01.03.2000**
(21) Anmeldenummer: 99111111.3
(22) Anmeldetag: 08.06.1999
(51) Int. Cl.: H02K 1/27

(54) **Permanentmagnetmotor und dessen Verwendung**

(30) Priorität: 25.08.1998 DE 19838661
(71) Anmelder: Mannesmann VDO Aktiengesellschaft, 60388 Frankfurt am Main (DE)
(72) Erfinder: Jones, Sigismund, 61267 Neu-Anspach (DE); Anschicks, Rolf, 35510 Butzbach (DE)
(74) Vertreter: Klein, Thomas, Dipl.-Ing.

(57) **Zusammenfassung**

Die Erfindung geht aus von einem Elektromotor mit einem mehrere einzelne, voneinander getrennte, permanent magnetische Magnetschalen aufweisenden Rotor, wobei die Magnetschalen auf einem Rotorkern angeordnet sind.

Dabei ist erfindungsgemäß vorgesehen, daß an den Stirnseiten der Magnetschalen nicht magnetische Mittel zum Festsetzen der Magnetschalen auf dem Rotorkern vorgesehen sind.

## Beschreibung

Der Erfindung betrifft einen Elektromotor mit einem mehrere einzelne, voneinander getrennte, permanentmagnetische Magnetschalen aufweisenden Rotor, wobei die Magnetschalen auf einem Rotorkern angeordnet sind.

Solche Elektromotoren werden als Innenläufermotoren bezeichnet und sind aus der Praxis bekannt.

Die permanentmagnetischen Magnetschalen bilden zusammen mit dem Rotorkern, an dem sich zumindest an einer Seite eine Motorwelle anschließt, den Rotor. Beim Herstellen eines solchen Rotors werden die Magnetschalen in geeigneter Weise auf dem Rotorkern befestigt. Dies kann mittels Kraftschluß oder Formschluß geschehen. Da die permanentmagnetischen Magnetschalen in der Regel aus einem kostengünstigen und spröden Material hergestellt sind, weisen diese Magnetschalen nur eine geringe Eigenstabilität auf und neigen darüber hinaus zur Rißbildung. Sind die Magnetschalen beispielsweise auf dem Rotorkern aufgeklebt, kann es vorkommen, daß sich die Magnetschalen an den Längskanten im Betrieb aufgrund der Zentrifulgakräfte ganz oder teilweise von dem Rotorkern ablösen oder an diesen Längskanten teilweise abbrechen oder abbröckeln. Dabei kann es passieren, daß ein magnetischer Kurzschluß zwischen den Magnetschalen entsteht, der das von dem Elektromotor erzeugbare Drehmoment verringert und im schlimmsten Fall der Elektromotor sogar stehen bleibt. Da in der Regel der Rotor von einem Stator konzentrisch umgeben ist, kann es durch die Beschädigung der Magnetschalen im Betrieb auch vorkommen, daß sich ein Teil der Magnetschale zwischen dem Rotorkern beziehungsweise einer weiteren Magnetschale und dem Stator verklemmt, so daß der gesamte Elektromotor blockiert ist und sich die Motorwelle nicht mehr drehen kann. Dies ist für sich alleine schon betrachtet ein Nachteil, da der Elektromotor stehen bleibt, wobei noch als wesentlicher Nachteil dazu kommt, daß eine Anwendung, die von einem Elektromotor insbesondere über ein Untersetzungsgetriebe angetrieben wird, aufgrund der Untersetzung vollständig blokkiert ist und sich daher beim Betrieb einer solchen Anwendung sicherheitskritische Aspekte einstellen.

Der Erfindung liegt daher die Aufgabe zugrunde, einen Elektromotor der eingangs genannten Art so zu gestalten, daß die permanentmagnetischen Magnetschalen besonders einfach montierbar sind und besonders zuverlässig auf dem Rotorkern gehalten sind.

Weiterhin soll eine vorteilhafte Verwendung eines solchen Elektromotors geschaffen werden.

Der erste Aspekt der Aufgabe ist erfindungsgemäß durch die Merkmale des Patentanspruches 1 gelöst.

Erfindungsgemäß sind an den Stirnseiten der Magnetschalen nichtmagnetische Mittel zum Festsetzen der Magnetschalen auf dem Rotorkern vorgesehen.

Dadurch wird in vorteihafterweise vermieden, daß sich an den Längsseiten beziehungsweise Längskanten der Magnetschalen Teile von diesen Magnetschalen ablösen können und somit wirksam eine Rißbildung vermieden. Dadurch können auch keine Teile von Magnetschalen zwischen den Rotorkern und den Stator gelangen, so daß das von dem Elektromotor erzeugbare Drehmoment konstant bleibt und eine Blockierung des Elektromotors vermieden wird. Darüber hinaus wird eine einfache Montierbarkeit des Elektromotors erzielt, da mit Herstellung des Rotorkerns schon die nichtmagnetischen Mittel zum Festsetzen der Magnetschalen zumindest an den Stirnseiten mit hergestellt werden können, so daß bei der Montage der Magnetschalen eine Soll-Lage automatisch vorgegeben ist, der gleichzeitig einen Schutz vor Rißbildung an den Längsseiten darstellt. So können die Magnetschalen, wenn sie nicht auch zusätzlich durch Klebstoff auf dem Rotorkern befestigt werden, zumindest durch Kraftschluß aufgrund der erfindungsgemäßen Mittel auf dem Rotorkern befestigt, insbesondere festgeklippst, werden.

In Weiterbildung der Erfindung sind die Mittel als die Stirnseiten der Magnetschalen umgebender, umspritzter Kunststoff ausgestaltet. Bei diesem Verfahren zur Herstellung des Rotors wird der Rotorkern, die Welle sowie die Magnetschalen, die schon auf dem Rotorkern befestigt sind, in eine Spritzgußform eingelegt, gegenseitig zentriert und ausgerichtet, so daß der Rotorkern an seinen für den Magnetfluß notwendigen, isolierungsfreien Flächen gegenüber der Spritzgußform abgedichtet wird, um die jeweiligen Zwischenräume zwischen der Spritzgußform und den entsprechenden Teilen des Rotorkerns, zwischen der Welle und dem Rotorkern sowie zwischen den einzelnen Magnetschalen mit einer elektrisch isolierenden Kunststoffmasse auszuspritzen. Je nach Anwendung kann es erforderlich sein, daß der Kunststoff temperaturfest ist, also seine Eigenschaften, insbesondere seine Form, auch bei hohen Temperaturen (beispielsweise oberhalb 80°C) beibehält.

Hierdurch wird in einem Arbeitsgang nicht nur der Formschluß zwischen der Motorwelle und dem Rotorkern hergestellt, sondern es werden auch die Stirnseiten der Magnetschalen mit einer gleichmäßig dicken Isolierungsschicht überzogen.

In Weiterbildung der Erfindung ist zwischen dem Rotorkern und den Magnetschalen ein Blechpaket angeordnet, welches zumindest an den Stirnseiten zusammen mit den Stirnseiten der Magnetschalen mit Kunststoff umspritzt ist. Die an sich bekannte Anordnung von Magnetschalen auf einem Blechpaket hat den Vorteil der Erhöhung des Drehmomentes, wobei die Umspritzung sowohl der Stirnseiten des Blechpaketes als auch der Stirnseiten der Magnetschalen zur Erhöhung der Stabilität des gesamten Rotorkernes beiträgt. Es entsteht eine in sich kompakte Einheit, wobei bei einer sehr genauen Spritzgußform und einer entsprechend genauen Herstellung ein Auswuchten des gesamten Rotors entfallen kann. Sollte ein solches Auswuchten dennoch erforderlich sein, kann dies gegebenenfalls durch einfache Bearbeitung des umspritzten Kunststoffes erfolgen, da sich die Bearbeitung eines entsprechenden Kunststoffes einfacher gestaltet als die Bearbeitung der spröden Magnetschalen oder des Blechpaketes.

In Weiterbildung der Erfindung ist der Raum zwischen dem Blechpaket und dem Rotorkern zumindest teilweise mit Kunststoff ausgefüllt. Auch hierdurch ist es wieder möglich, den Rotorkern in die Spritzgußform einzulegen, anschließend das Blechpaket, gegebenenfalls mit dem schon darauf montierten Magnetschalen, ebenfalls in die Spritzgußform einzulegen und anschließend den sich ergebenen konzentrischen Spalt zwischen der Innenseite des Blechpaketes und der äußeren Oberfläche des Rotorkernes mit Kunststoff auszuspritzen. Dadurch ergibt sich wieder eine einfache, schnelle und vor allem genaue Montage des Rotors. In vorteilhafter Weise sind die Magnetschalen schon auf dem Blechpaket befestigt, so daß diese im gleichen Arbeitsgang an den Stirnseiten mit Kunststoff umspritzt werden können, so daß nach diesem Spritzvorgang der komplette Rotor fertig ist, wenn der Rotorkern schon mit der Motorwelle versehen worden ist.

In der Weiterbildung der Erfindung weist das Blechpaket auf seiner Innenseite und/oder der Rotorkern auf seiner Außenseite Vertiefungen zur Aufnahme von Kunststoff auf. Durch diese Vertiefungen, die insbesondere entgegen der Drehrichtung des Rotors ausgerichtet sind, wird eine sehr gute Haltbarkeit des Blechpaketes auf dem Rotorkern bei gleichzeitiger Beabstandung, das heißt Isolierung, des Blechpaketes von dem Rotorkern, erzielt. Dadurch erhöht sich die Stabilität des gesamten Rotors, was zur Erhöhung der Lebensdauer des gesamten Elektromotors beiträgt.

In Weiterbildung der Erfindung ist der Raum zwischen dem Rotorkern und einer konzentrisch innerhalb des Rotorkerns gelagerten Motorwelle zumindest teilweise mit Kunststoff ausgefüllt. Dieses ergänzende konstruktive Merkmal trägt ebenfalls zur schnelleren Herstellung des Rotors bei, da, wie oben schon beschrieben, die Motorwelle, der Rotorkern, das Blechpaket und die Magnetschalen in eine entsprechend ausgestaltete (Spritzguß-)Form eingesetzt werden können, entsprechend abgedichtet werden und anschließend die betreffenden Zwischenräume mit Kunststoff ausgefüllt, insbesondere ausgespritzt, werden, so daß bei einer hohen Genauigkeit der (Spritzguß-)Form nach Herausnahme der fertige Rotor zur Verfügung steht, ohne das er weiterbearbeitet werden müßte. Sind trotzdem noch geringfügige Arbeiten an dem fertigen Rotor erforderlich, kann dies durch Bearbeiten des eingespritzten Kunststoffes erfolgen, was bedeutend einfacher ist als die Bearbeitung von Blechteilen des Rotors. Auch hier kann die Innenseite des Rotorkernes beziehungsweise die Oberfläche der Motorwelle wieder mit Vertiefungen, insbesondere in Form einer Rändelung , versehen sein, um die Festigkeit und Stabilität weiter zu erhöhen, wobei die Rändelung daher von besonderem Vorteil ist, daß die mechanische Verbindung zwischen dem Rotorkern und der Motorwelle besonders hoch ist, da umfangsmäßig um den Rotorkern, insbesondere über das Blechpaket sowie die Magnetschalen, das zu erzeugende Drehmoment in die Motorwelle eingeleitet wird.

Ausführungsbeispiele eines erfindungsgemäßen Elektromotors sind im folgenden beschrieben und anhand der Figuren erläutert.

Es zeigen:
- Figur 1:: einen Rotor eines Elektromotors,
- Figur 2:: eine Seitenansicht des Rotors gemäß Figur 1,
- Figur 3:: einen Querschnitt durch den Rotor gemäß Figur 1,
- Figur 4:: eine detaillierte Ausgestaltung eines Rotors,
- Figur 5:: einen Querschnitt durch den Rotor gemäß Figur 4,
- Figuren 6 und 7:: Querschnitte durch weitere Rotoren, ähnlich dem in Figur 4 gezeigten Rotor,

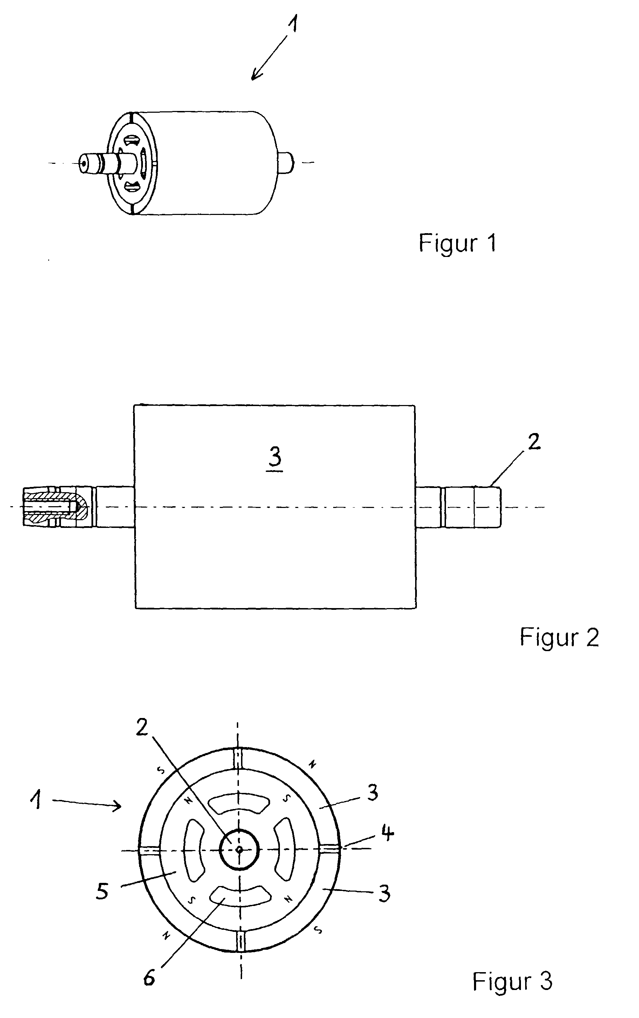

Figur 1 zeigt einen Rotor 1 eines Elektromotors, dessen Aufbau an sich bekannt ist. An zumindest einer Seite, in Figur 1 an beiden Seiten gezeigt, befindet sich die hier noch nicht bezeichnete Motorwelle, mittels der der Rotor 1 gelagert ist und eine beliebige Anwendung antreiben kann. In Figur 1 nicht gezeigt ist der Stator, der konzentrisch um den Außenumfang des Rotors 1 angeordnet ist. Der in Figur 1 gezeigte Elektromotor ist als Innenläufermotor ausgestaltet, wobei sich die Wicklungen im nicht gezeigten Stator befinden.

Ein solcher Elektromotor hat den Vorteil, daß er keine störanfälligen Kohlebürsten zur Übertragung von elektrischer Energie auf die Wicklungen benötigt, wobei ein weiterer Vorteil dieses Elektromotors darin zu sehen ist, daß sich seine Drehzahl sehr schnell verändern läßt, da der Rotor durch die Anordnung der Magnetschalen auf einem kleinen Radius im Zentrum des Rotors eine geringe Massenträgheit aufweist. Dies kann je nach Anwendungsfall von besonderem Vorteil sein. Darauf wird später noch eingegangen.

Figur 2 zeigt den Rotor 1 gemäß Figur 1 in der Seitenansicht, wobei hier eine Motorwelle mit der Bezugsziffer 2 versehen ist. Die Motorwelle 2 ist entweder als Stummel an dem Rotor 1 angeordnet, oder durchdringt diesen einstückig. Weiterhin ist in Figur 2 die Oberfläche von Magnetschalen 3 erkennbar.

Figur 3 zeigt einen Querschnitt des Rotors 1 gemäß Figur 1. Zur Verdeutlichung des Aufbaus des Rotors 1, der auch in Figur 2 dargestellt ist, sind die Magnetschalen 3 gezeigt, deren magnetische Polarität sich abwechselt (N: Nord, S: Süd). Diese Magnetschalen 3 sind durch Luftspalte 4 in Längsrichtung voneinander magnetisch getrennt. Diese Magnetschalen 3 sind auf einem Rotorkern 5 aufgebracht, insbesondere aufgeklebt, wobei dieser Rotorkern 5 wiederum auf der Motorwelle 2 angeordnet ist oder die Motorwelle 2 an diesem Rotorkern 5 befestigt ist. Die magnetische Ausrichtung des Rotorkerns 5 ist in Figur 3 wiederum durch die Bezugsziffern N und S angegeben. Innerhalb des Rotorkerns 5 sind noch Ausnehmungen 6, die an sich bekannt sind, gezeigt.

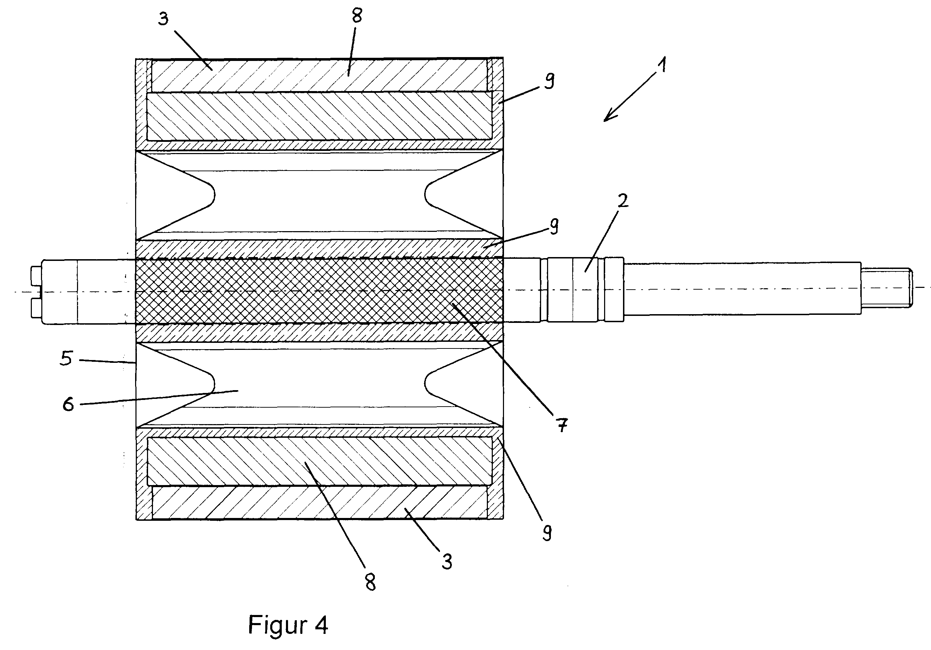

Figur 4 zeigt einen Längsschnitt durch einen erfindungsgemäßen Rotor 1, wobei gleiche Elemente wie in den vorangegangenen Figuren mit gleichen Bezugsziffern versehen sind.

Ergänzend zu dem in den vorangegangenen Figuren gezeigten Rotor 1 weist die Motorwelle 2 und/oder die der Motorwelle 2 zugewandte Oberfläche des Rotorkernes 5 eine Rändelung 7 auf, die der stabilen Verbindung zwischen der Motorwelle 2 und dem Rotorkern 5 dient, wie dies später noch beschrieben wird.

Auf dem Rotorkern 5 ist konzentrisch um diesen Rotorkern 5 herum ein Blechpacket 8 angeordnet, welches einstückig über den Rotorkern 5 geschoben wird. Denkbar ist auch die Herstellung des Blechpaketes 8 bestehend aus mehreren längsgeteilten Teilen oder auch aus mehreren Schichten.

Erfindungsgemäß ist nun eine Isolierschicht 9 aus elektrisch nichtleitenden Kunststoff vorgesehen, die zumindest an den Stirnseiten der Magnetschalen 3 vorgesehen ist. Diese äußere Isolierschicht 9 erstreckt sich bei Betrachtung der Figur 4 zumindest über die Stirnseiten der Magnetschalen 3 sowie des Blechpaketes 8, aber auch erstreckt sie sich zwischen der Oberfläche des Rotorkernes 5 sowie des Blechpaketes 8, so daß die äußere Isolierschicht 9 bei Betrachtung der Figur 4 im Längsschnitt eine längsgestreckte U-Form aufweist. Ergänzend dazu ist noch eine Isolierschicht 9 (eine innere Isolierschicht) zwischen der Innenseite des Rotorkernes 5 und der Motorwelle 2 eingespritzt, um die Verbindung zwischen der Motorwelle 2 und dem Rotorkern 5 herzustellen. Zur Herstellung eines in Figur 4 beispielhaft gezeigten Rotors 1 können also die Elemente wie Motorwelle 2, Rotorkern 5, Blechpaket 8 und gegebenenfalls die auf dem Blechpaket 8 schon montierten Magnetschalen 3 in eine Spritzgußform eingesetzt werden und diese eingesetzten Teile dann mit Kunststoff umspritzt werden, so daß sich ein in sich geschlossener und stabiler Rotor 1 nach Herausnahme aus der Spritzgußform einstellt. Denkbar ist auch, die in Figur 4 gezeigte äußere Isolierschicht 9 herzustellen und anschließend erst das Blechpaket 8 und dann die Magnetschalen 3 zu montieren, insbesondere einzuklippsen, wobei es auch denkbar ist, daß das Blechpaket 8 schon beim Spritzgießen von der äußeren Isolierschicht 9 umgeben worden ist und nur noch die Magnetschalen 3 eingesetzt werden müssen. Die in Figur 4 gezeigte geometrische Endlinie der Isolierschicht 9 (wobei diese geometrische Endlinie im wesentlichen ausgerichtet ist senkrecht zu der Motorwelle 2) muß nicht die gezeigte in etwa senkrechte Ausrichtung haben, sondern es können an den Stirnseiten des Rotors 1 auch andere Formen zum Beispiel nach Art einer Nabe an den beiden Gestirnseiten des Rotors 1, angegossen oder angespritzt werden, wobei auch zumindest eine der beiden Naben an ihrer freien Stirnseite als ein Kupplungsteil für ein anzutreibendes Teil ausgebildet ist, so daß hierdurch die Anbringung einer Kupplung, beispielsweise zum Antrieb einer Kraftstoffförderpumpe, eingespart wird, wodurch sich die Herstellungskosten verringern. Zur Herstellung dieses Kupplungsteiles ist dann die Spritzgußform entsprechend ausgebildet. Darüber hinaus können auch aus strömungstechnischer Sicht entsprechende Naben mit angegossen werden, was ebenfalls bei einer innendurchströmten Kraftstoffpumpe von Vorteil ist.

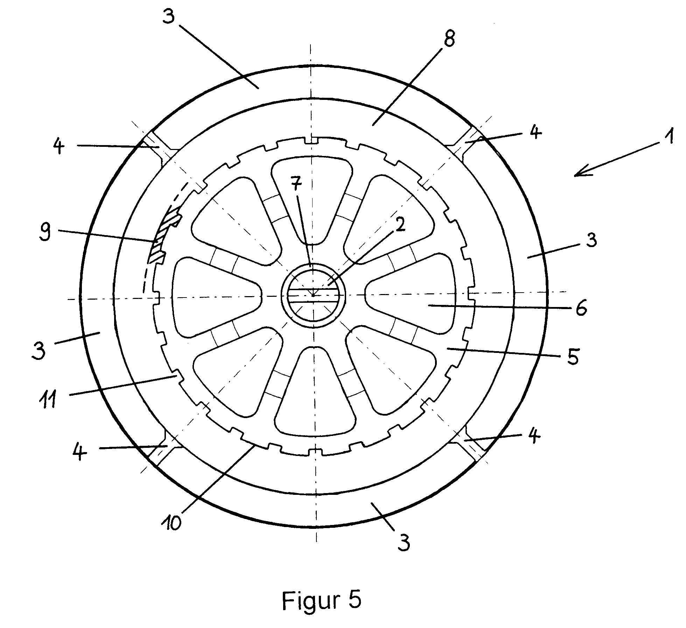

Figur 5 zeigt einen Querschnitt durch den Rotor 1 gemäß Figur 4. Hier ist im Detail die Ausgestaltung des Rotorkernes 5, des Blechpaketes 8 sowie die Anordnung der Magnetschalen 3 auf dem Blechpaket 8 erkennbar. Nicht dargestellt ist die Umspritzung der Stirnseiten der Magnetschalen 3 beziehungsweise des Blechpaketes 8, da der Querschnitt in etwa in der Mitte des Rotors 1 liegt.

In Figur 5 ist noch zu erkennen, daß zumindest der Rotorkern 5 auf seiner Oberfläche Vorsprünge 10 und entsprechende Vertiefungen 11 aufweist, die sich bei dem hier gezeigten Beispiel in Längsrichtung erstrecken. Wenn die in Richtung der Motorwelle 2 gerichtete Oberfläche des Blechpaketes 8 direkt auf der Oberfläche des Rotorkernes 5 anliegt, werden beim Spritzgießen lediglich die Vertiefungen 11 mit Kunststoff ausgefüllt. Liegen aber die Innenseite des Blechpaketes 8 und die Oberfläche des Rotorkernes 5 auf Distanz zueinander in der Spritzgußform, werden nicht nur die Vertiefungen 11 des Rotorkernes 5 ausgespritzt, sondern auch der Raum zwischen diesen beiden Teilen, wie dies in Figur 5 durch den schraffiert dargestellten Teilbereich angedeutet ist. Es versteht sich von selbst, daß solcher Art gestaltete Vorsprünge 10 und Vertiefungen 11 auch im Bereich zwischen der Motorwelle 2 und der Innenseite des Rotorkernes 5 angeordnet seien können, wobei diese hier schon als Rändelung 7 bezeichnet sind. Die Vorsprünge 10 beziehungsweise Vertiefungen 11 können punktförmig angeordnet sein, aber auch sich längs, quer, oder diagonal zueinander erstrecken. Die in Figur 5 gezeigte Längserstreckung der Vorsprung 10 beziehungsweise der Vertiefungen 11 hat den besonderen Vorteil, daß zwischen dem Blechplaket 8 mit seinen Magnetschalen 3 eine besonders feste Verbindung zu dem Rotorkern 5 durch die Isolierschicht 9 hergestellt wird, um somit das eingeleitete Drehmoment zuverlässig übertragen zu können.

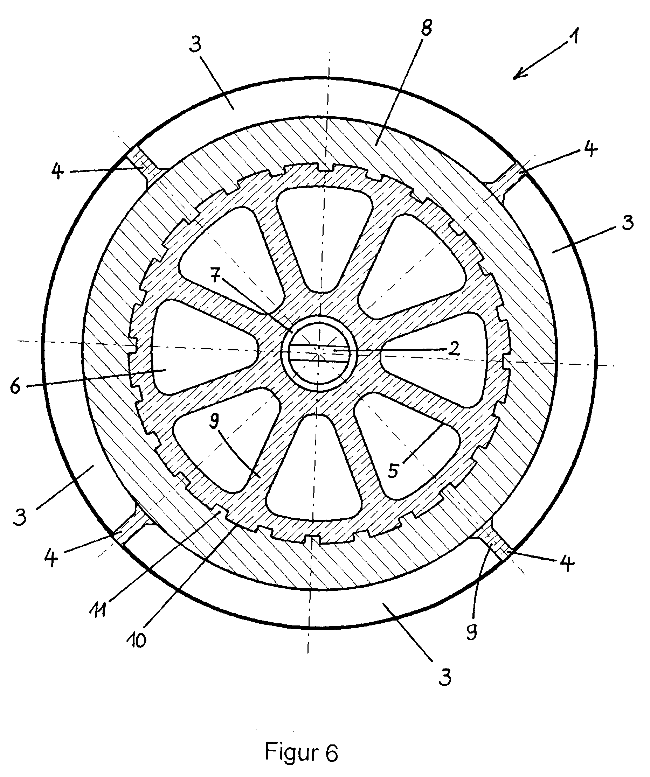

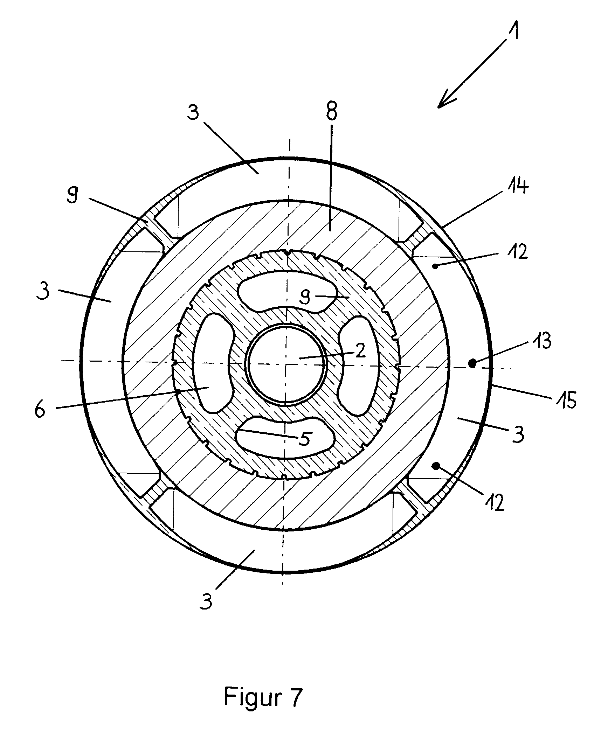

Die Figuren 6 und 7 zeigen weitere Querschnitte durch einen Rotor, wobei der in den Figuren 6 und 7 gezeigte Rotor ähnlich aufgebaut ist wie der in Figur 4 im Längsschnitt gezeigte Rotor.

Bei dem in Figur 6 gezeigten Rotor 1 wurden die Motorwelle 2, das Blechpaket 8 sowie die Magnetschalen 3 in eine Form (insbesondere eine Spritzgußform) eingelegt, fixiert und anschließend die in die Form eingelegten Teile mit Kunststoff umgeben, so daß bei dem in Figur 6 gezeigten Rotor 1 der Rotorkern 5 nun mehr nicht mehr aus Metall, sondern aus Kunststoff besteht. Auch hier sind wieder Ausnehmungen 6 zwecks Gewichtsersparnis eingebracht, wobei diese Ausnehmungen 6 bei einem Rotorkern 5 aus Kunststoff auch entfallen können, da Kunststoff in der Regel ein niedrigeres spezifischeres Gewicht hat als Metall. Wie zu erkennen ist, weist nun das Blechpaket an seiner Innenseite die Vorsprünge 10 und Vertiefungen 11 auf, in die sich der Kunststoff festsetzen kann, um eine bessere Stabilität zu gewährleisten. Dies ist nicht zwangsweise erforderlich, so daß das Blechpaket 8 nach innen gerichtet auch eine glatte oder in anderer Form aufgerauhte Oberfläche aufweisen kann.

In Figur 7 ist ein Rotor 1 gezeigt, bei dem auf dem Blechpaket 8 Magnetschalen 3 angeordnet sind, die an ihren Längsseiten, also in Richtung der Luftspalte 4, einen dünneren Bereich 12 und in etwa kontinuierlich in die Mitte verlaufend einen dickeren Bereich 13 aufweisen. Diese dünneren und dickeren Bereiche 12 und 13 der Magnetschalen 3 entstehen bei der Herstellung der Magnetschale 3 und sind gewollt beziehungsweise so dimensioniert, daß dadurch das Magnetfeld, das insgesamt von den Magnetschalen 3 erzeugt wird, vergleichmäßigt wird, wodurch ein ruhigerer Lauf und eine bessere Regelung des Elektromotors gegeben ist.

Wird ein solcher Rotor 1 mit derart gestalteten Magnetschalen 3 in eine Form (Spritzgußform) eingelegt, entsteht beim Ausfüllen der Luftspalte 4 mit Kunststoff in den dünneren Bereichen 12 der Magnetschalen 3 auf deren Oberfläche eine dickere Spritzhaut 14, die in Richtung der dickeren Bereiche 13 der Magnetschalen 3 zu einer dünneren Spritzhaut 15 verläuft, wobei je nach Ausgestaltung der Form auch nur die dünneren Bereiche 12 (im Bereich der Längsseiten) der Magnetschalen 3 mit Kunststoff umgeben werden, nicht jedoch die dickeren Bereiche 13. In vorteihafter Weise werden aber sämtliche Oberflächen der Magnetschalen 3 mit Kunststoff überzogen, der sogenannten Spritzhaut, um ein Ablösen von Teilchen der Magnetschalen 3 zu vermeiden.

### Bezugszeichenliste:

- 1.: Rotor
- 2.: Motorwelle
- 3.: Magnetschalen
- 4.: Luftspalt
- 5.: Rotorkern
- 6.: Ausnehmungen
- 7.: Rändelung
- 8.: Blechpaket
- 9.: Isolierschicht (Kunststoff)
- 10.: Vorsprünge
- 11.: Vertiefungen
- 12.: dünnerer Bereich
- 13.: dickerer Bereich
- 14.: dickere Spritzhaut
- 15.: dünnere Spritzhaut

## Patentansprüche

1. Elektromotor mit einem mehrere einzelne, voneinander getrennte, permanentmagnetische Magnetschalen (3) aufweisenden Rotor (1), wobei die Magnetschalen (3) auf einem Rotorkern (5) angeordnet sind, dadurch gekennzeichnet, daß zumindest an den Stirnseiten der Magnetschalen (3) nichtmagnetische Mittel zum Festsetzen der Magnetschalen (3) auf dem Rotorkern (5) vorgesehen sind.

2. Elektromotor nach Anspruch 1, dadurch gekennzeichnet, daß die Mittel als die Stirnseiten der Magnetschalen (3) umgebender umspritzter Kunststoff ausgestaltet sind.

3. Elektromotor nach Anspruch 1 oder 2, dadurch gekennzeichnet, daß zwischen dem Rotorkern (5) und den Magnetschalen (3) ein Blechpaket (8) angeordnet ist, welches zumindest an den Stirnseiten zusammen mit den Stirnseiten der Magnetschalen (3) mit Kunststoff umspritzt ist.

4. Elektromotor nach einem der vorhergehenden Ansprüche, dadurch gekennzeichnet, daß der Raum zwischen dem Blechpaket (8) und dem Rotorkern (5) zumindest teilweise mit Kunststoff ausgefüllt ist.

5. Elektromotor nach einem der vorhergehenden Ansprüche, dadurch gekennzeichnet, daß das Blechpaket auf seiner Innenseite und/oder der Rotorkern (5) auf seiner Außenseite Vertiefungen (11) zur Aufnahme von Kunststoff aufweist.

6. Elektromotor nach einem der vorhergehenden Ansprüche, dadurch gekennzeichnet, daß der Raum zwischen dem Rotorkern (5) und einer konzentrisch innerhalb des Rotorkernes (5) gelagerten Motorwelle (2) zumindest teilweise mit Kunststoff ausgefüllt ist.

7. Verwendung eines Elektromotors nach einem der vorhergehenden Ansprüche zum Antrieb einer elektrischen Lenkhilfe eines Fahrzeuges, insbesondere eines Personenkraftwagens.

8. Verwendung eines Elektromotors nach einem der vorhergehenden Ansprüche zum Antrieb einer Pumpe, insbesondere einer Wasserpumpe oder einer Kraftstoffpumpe zur Kraftstofförderung für eine Brennkraftmaschine, insbesondere eines Fahrzeuges.
